(19) Europäisches Patentamt

European Patent Office

Office européen des brevets

(11) **EP 1 731 546 A1**

(12) **EUROPEAN PATENT APPLICATION**
published in accordance with Art. 158(3) EPC

(43) Date of publication:
**13.12.2006 Bulletin 2006/50**

(51) Int Cl.:
***C08G 63/85*** (2006.01)

(21) Application number: **05727839.2**

(22) Date of filing: **29.03.2005**

(86) International application number:
**PCT/JP2005/005905**

(87) International publication number:
**WO 2005/095487 (13.10.2005 Gazette 2005/41)**

(84) Designated Contracting States:
**DE**

(30) Priority: **01.04.2004 JP 2004108918**

(71) Applicant: **Mitsubishi Chemical Corporation**
**Tokyo**
**108-0014 (JP)**

(72) Inventors:
• **HAMANO, Toshiyuki**
**Yokkaichi-shi,**
**Mie 5108530 (JP)**

• **YAMAMOTO, Masanori**
**Yokkaichi-shi,**
**Mie 5108530 (JP)**
• **MATSUZONO, Shinichiro**
**Yokkaichi-shi,**
**Mie 5108530 (JP)**
• **NODA, Kenji c/o Techno Polymer Co., Ltd.,**
**Mie-Ken 5100871 (JP)**

(74) Representative: **HOFFMANN EITLE**
**Patent- und Rechtsanwälte**
**Arabellastrasse 4**
**81925 München (DE)**

(54) **POLYBUTYLENE TEREPHTHALATE**

(57) Polybutylene terephthalate has an intrinsic viscosity of 0.7 to 1.0 dL/g and an end carboxyl group concentration of 0.1 to 18 μeq/g, which is produced in a presence of a catalyst comprising a titanium compound and a metal compound containing a metal of Group 2A of the Periodic Table. In the preferable embodiment of the present invention, the polybutylene terephthalate has a crystallization temperature of 170 to 195°C as measured at a temperature drop rate of 20°C/min using a differential scanning colorimeter, an end vinyl group concentration of not more than 10 μeq/g, and not more than 10% of a solution haze of a solution prepared by dissolving 2.7 g of said polybutylene terephthalate in 20 mL of a mixed solvent containing phenol and tetrachloroethane at a weight ratio of 3:2.

The polybutylene terephthalate of the present invention exhibits excellent color tone, hydrolysis resistance, heat stability, transparency and moldability as well as a less content of impurities, which is suitably applicable to films, monofilaments, fibers, electric and electronic parts, automobile parts, etc.

EP 1 731 546 A1

**Description**

TECHNICAL FIELD

The present invention relates to polybutylene terephthalate, and more particularly, to polybutylene terephthalate having excellent color tone, hydrolysis resistance, heat stability, transparency and moldability as well as a less content of impurities, which can be suitably applied to films, monofilaments, fibers, electric and electronic parts, automobile parts, etc.

BACKGROUND ARTS

Polybutylene terephthalate as a typical engineering plastic among thermoplastic polyester resins has been extensively used as a raw material of injection-molded articles such as automobile parts, electric and electronic parts and precision equipment parts because of easiness of molding as well as excellent mechanical properties, heat resistance, chemical resistance, aroma-retention property and other physical and chemical properties. In recent years, there is a tendency that polybutylene terephthalate is also used in more extensive applications such as films, sheets, monofilaments and fibers owing to the above excellent properties.

However, polybutylene terephthalate is not necessarily sufficient in hydrolysis resistance, and tends to undergo problems such as deterioration in mechanical properties due to the decease of a molecular weight thereof especially when used under wet-heat conditions. In general, it is known that polyesters having a higher end carboxyl group concentration are more deteriorated in hydrolysis resistance (for example, refer to "Handbook of Saturated Polyester Resins", December 22, 1989, published by Nikkan Kogyo Newpaper Co., Ltd., pp. 192-193 and 304). Therefore, polybutylene terephthalate having a higher end carboxyl group concentration also shows a higher hydrolysis velocity under the wet-heat conditions, thereby causing significant problems such as a decease in a molecular weight thereof due to hydrolysis as well as deterioration in the mechanical properties thereof.

To solve the above problems, there has been extensively used such a method in which polybutylene terephthalate obtained by melt-polymerization method is once solidified and then subjected to solid state polymerization at a temperature lower than a melting point thereof to decease an end carboxyl group concentration thereof (for example, refer to Japanese Patent Application Laid-Open (KOKAI) No. 9-316183(1997)). However, since a melt molding process for polybutylene terephthalate is ordinarily conducted at a temperature not lower than the melting point thereof, even though the end carboxyl group concentration of polybutylene terephthalate is decreased by the solid state polymerization, the conventionally produced polybutylene terephthalate tends to undergo such a problem that its end carboxyl group concentration is increased again upon the molding. The increase in end carboxyl group concentration of polybutylene terephthalate tends to induce a reaction for generating butadiene or tetrahydrofuran (for example, refer to "Handbook of Saturated Polyester Resins", December 22, 1989, published by Nikkan Kogyo Newpaper Co., Ltd., pp. 192-193 and 304). For this reason, there tends to arise such a problem that the amount of gases generated upon the molding is increased.

Also, it is known that the velocity of increase in the end carboxyl group concentration of polybutylene terephthalate upon melting is accelerated by the existence of a titanium compound. If the amount of the titanium compound used is lessened to prevent the increase of the end carboxyl group concentration, the polymerization velocity tends to become too slow. Therefore, the polymerization temperature must be increased in order to produce polybutylene terephthalate at a practically acceptable polymerization velocity. As a result, the use of the high polymerization temperature tends to accelerate the decomposition reaction causing the increase in the end carboxyl group concentration of polybutylene terephthalate, thereby failing to decrease the end carboxyl group concentration of polybutylene terephthalate to a desired level. In addition, such a high temperature reaction tends to cause deterioration in color tone of polybutylene terephthalate, resulting in problems such as poor commercial value thereof.

To solve the above problems, there has been proposed the method in which a titanium compound and a magnesium compound as catalysts are used at a specific molar ratio to lessen the polymerization temperature (for example, refer to Japanese Patent Application Laid-Open (KOKAI) No. 8-20638(1996)). However, this method fails to sufficiently decrease the end carboxyl group concentration and, therefore, is still unsatisfactory to meet the recent requirement for a high hydrolysis resistance of polybutylene terephthalate. On the other hand, there has been proposed the method in which titanium kept in a specific state is used to improve the hydrolysis resistance of polybutylene terephthalate (for example, refer to Japanese Patent Application Laid-Open (KOKAI) No. 8-41182(1996)). However, this method also fails to sufficiently decrease the end carboxyl group concentration especially in a low-molecular weight range where mechanical properties of polybutylene terephthalate are considerably influenced by the decease in molecular weight thereof. Therefore, there is a demand for further decreasing the end carboxyl group concentration of polybutylene terephthalate.

DISCLOSURE OF THE INVENTION

SUBJECT TO BE SOLVED BY THE INVENTION

The present invention has been conducted to solve the above conventional problems. An object of the present invention is to provide polybutylene terephthalate having excellent color tone, hydrolysis resistance, heat stability, transparency and moldability as well as a less content of impurities, which is suitably applicable to films, monofilaments, fibers, electric and electronic parts, automobile parts, etc.

MEANS FOR SOLVING THE SUBJECT

As a result of the present inventors' earnest studies for solving the above problems, it has been found that when the polymerization reaction for production of polybutylene terephthalate is conducted under a specific condition using a catalyst comprising a titanium compound and a metal compound containing a metal of Group 2A of the Periodic Table, the increase in end carboxyl group concentration of polybutylene terephthalate due to a heat decomposition reaction thereof can be effectively inhibited, resulting in considerable decease in the end carboxyl group concentration even in a low-molecular weight range thereof, and further the increase in the end carboxyl group concentration upon melt-molding can also be prevented, and the polycondensation reaction is considerably accelerated, resulting in lower in the polymerization temperature. The present invention has been attained on the basis of the above finding.

To accomplish the aim, in a first aspect of the present invention, there is provided polybutylene terephthalate having an intrinsic viscosity of 0.7 to 1.0 dL/g and an end carboxyl group concentration of 0.1 to 18 $\mu$eq/g, which is produced in a presence of a catalyst comprising a titanium compound and a metal compound containing a metal of Group 2A of the Periodic Table.

EFFECT OF THE INVENTION

According to the present invention, there is provided polybutylene terephthalate having excellent color tone, hydrolysis resistance, heat stability, transparency and moldability as well as a less content of impurities, which is suitably applicable to films, monofilaments, fibers, electric and electronic parts, automobile parts, etc.

BRIEF DESCRIPTION OF THE DRAWINGS

Fig. 1 is an explanatory view showing an example of an esterification reaction process or a transesterification reaction process adopted in the present invention.
Fig. 2 is an explanatory view showing an example of a polycondensation reaction process adopted in the present invention.

EXPLANATION OF REFERENCE NUMBER

**[0012]**

| 1: | Raw material feed line |
| 2: | Recirculation line |
| 3: | Titanium catalyst feed line |
| 4: | Discharge line |
| 5: | Distillate line |
| 6: | Discharge line |
| 7: | Circulation line |
| 8: | Discharge line |
| 9: | Gas discharge line |
| 10: | Condensate line |
| 11: | Discharge line |
| 12: | Circulation line |
| 13: | Discharge line |
| 14: | Vent line |
| 15: | Group 2A metal catalyst feed line |

A:            Reaction vessel
B:            Discharge pump
C:            Rectifying column
D and E:    Pump
F:            Tank
G:            Condenser
L1 and L3:   Discharge line
L2 and L4:   Vent line
a:            First polycondensation reaction vessel
d:            Second polycondensation reaction vessel
c and e:    Discharging gear pump
g:            Die head
h:            Rotary cutter

## BEST MODE FOR CARRYING OUT THE INVENTION

The present invention is described in detail below. The preferred embodiments of the present invention as described below are only typical and illustrative, and, therefore, the present invention is not limited thereto.

The polybutylene terephthalate of the present invention (hereinafter referred to merely as "PBT") is a polymer having a structure including ester bonds between terephthalic acid units and 1,4-butanediol units, in which not less than 50 mol% of dicarboxylic acid units constituting the polybutylene terephthalate are composed of the terephthalic acid units, and not less than 50 mol% of diol units constituting the polybutylene terephthalate are composed of the 1,4-butanediol units. The terephthalic acid units are contained in an amount of preferably not less than 70 mol%, more preferably not less than 80 mol%, still more preferably not less than 95 mol% based on the whole dicarboxylic acid units, and the 1,4-butanediol units are contained in an amount of preferably not less than 70 mol%, more preferably not less than 80 mol%, still more preferably not less than 95 mol% based on the whole diol units. When the content of the terephthalic acid units or the 1,4-butanediol units is less than 50 mol%, the resultant PBT tends to be deteriorated in crystallization velocity, resulting in poor moldability thereof.

In the present invention, the dicarboxylic acid components other than terephthalic acid are not particularly limited. Examples of the dicarboxylic acid components other than terephthalic acid may include aromatic dicarboxylic acids such as phthalic acid, isophthalic acid,
4,4'-diphenyldicarboxylic acid,
4,4'-diphenyletherdicarboxylic acid,
4,4'-benzophenonedicarboxylic acid,
4,4'-diphenoxyethanedicarboxylic acid,
4,4'-diphenylsulfonedicarboxylic acid and
2,6-naphthalenedicarboxylic acid; alicyclic dicarboxylic acids such as 1,2-cyclohexanedicarboxylic acid, 1,3-cyclohexanedicarboxylic acid and 1,4-cyclohexane dicarboxylic acid; and aliphatic dicarboxylic acids such as malonic acid, succinic acid, glutaric acid, adipic acid, pimelic acid, suberic acid, azelaic acid and sebacic acid. These dicarboxylic acid components may be introduced into the polymer skeleton using dicarboxylic acids themselves or dicarboxylic acid derivatives such as dicarboxylic acid esters and dicarboxylic acid halides as raw materials.

In the present invention, the diol components other than 1,4-butanediol are not particularly limited. Examples of the diol components other than 1,4-butanediol may include aliphatic diols such as ethylene glycol, diethylene glycol, polyethylene glycol, 1,2-propanediol, 1,3-propanediol, polypropylene glycol, polytetramethylene glycol, dibutylene glycol, 1,5-pentanediol, neopentyl glycol, 1,6-hexanediol and 1,8-octanediol; alicyclic diols such as 1,2-cyclohexanediol, 1,4-cyclohexanediol, 1,1-cyclohexane dimethylol and 1,4-cyclohexane dimethylol; and aromatic diols such as xylylene glycol, 4,4'-dihydroxybiphenyl, 2,2-bis(4-hydroxyphenyl)propane and bis(4-hydroxyphenyl)sulfone.

In the present invention, as comonomers copolymerizable with the dicarboxylic acid components and the diol components, there may also be used monofunctional components such as hydroxycarboxylic acids, e.g., lactic acid, glycolic acid, m-hydroxybenzoic acid, p-hydroxybenzoic acid, 6-hydroxy-2-naphthalenecarboxylic acid and p-β-hydroxyethoxybenzoic acid, alkoxycarboxylic acids, stearyl alcohol, benzyl alcohol, stearic acid, benzoic acid, t-butylbenzoic acid and benzoylbenzoic acid; and tri- or more polyfunctional components such as tricarballylic acid, trimellitic acid, trimesic acid, pyromellitic acid, gallic acid, trimethylol ethane, trimethylol propane, glycerol and pentaerythritol.

The PBT of the present invention can be produced by subjecting 1,4-butanediol and terephthalic acid (or dialkyl terephthalate) to esterification reaction (or transesterification reaction) to obtain an oligomer thereof, and then subjecting the resultant oligomer to polycondensation reaction in the presence of a catalyst comprising a titanium compound and a metal compound containing a metal of Group 2A of the Periodic Table. As the catalysts for the polycondensation reaction, there may be used the same catalysts as previously used upon the esterification reaction (or transesterification reaction) and directly transferred therefrom into the polycondensation reaction system. Alternatively, no catalysts are used upon the esterification reaction (or transesterification reaction), or catalysts comprising either of the titanium compound and the metal compound containing a metal of Group 2A of the Periodic Table, are used in the previous esterification reaction (or transesterification reaction) may be transferred into the polycondensation reaction system, and the other thereof may be freshly added upon the polycondensation reaction stage. In addition, only a part of the whole amount of the catalysts used through the whole reactions may be used in the esterification reaction (or transesterification reaction), and a remaining part thereof may be appropriately added with the progress of the subsequent polycondensation reaction. In any of the above cases, the PBT finally produced in the present invention inevitably contains titanium and the metal of Group 2A of the Periodic Table. The contents of titanium and the metal of Group 2A of the Periodic Table in PBT are described in detail hereinlater. Meanwhile, the titanium compound and the metal compound containing a metal of Group 2A of the Periodic Table are hereinafter occasionally referred to as a "titanium catalyst" and a "Group 2A metal catalyst", respectively.

Specific examples of the titanium compound may include inorganic titanium compounds such as titanium oxide and titanium tetrachloride; titanium alcoholates such as tetramethyl titanate, tetraisopropyl titanate and tetrabutyl titanate; and titanium phenolates such as tetraphenyl titanate. Among the titanium compounds, preferred are tetraalkyl titanates. Of these titanium compounds, more preferred is tetrabutyl titanate.

In addition to titanium, tin may be used as a catalyst. Tin may be usually used in the form of a tin compound. Specific examples of the tin compound may include dibutyl tin oxide, methylphenyl tin oxide, tetraethyl tin, hexaethyl ditin oxide, cyclohexahexyl ditin oxide, didodecyl tin oxide, triethyl tin hydroxide, triphenyl tin hydroxide, triisobutyl tin acetate, dibutyl tin diacetate, diphenyl tin dilaurate, monobutyl tin trichloride, tributyl tin chloride, dibutyl tin sulfide, butylhydroxy tin oxide, methylstannoic acid, ethylstannoic acid and butylstannoic acid.

The tin tends to deteriorate a color tone of the resultant PBT. Therefore, the amount of the tin added is usually not more than 200 ppm, preferably not more than 100 ppm, more preferably not more than 10 ppm, calculated as a tin atom. Most preferably, no tin is added to the PBT.

Specific examples of the metal compound containing a metal of Group 2A of the Periodic Table may include various compounds of beryllium, magnesium, calcium, strontium or barium. Of these metal compounds, from the standpoints of easy handling and availability as well as high catalyst effect, preferred are magnesium compounds and calcium compounds, and more preferred are magnesium compounds exhibiting a more excellent catalyst effect. Specific examples of the magnesium compounds may include magnesium acetate, magnesium hydroxide, magnesium carbonate, magnesium oxide, magnesium alkoxide and magnesium hydrogen phosphate. Specific examples of the calcium compounds may include calcium acetate, calcium hydroxide, calcium carbonate, calcium oxide, calcium alkoxide and calcium hydrogen phosphate. Of these metal compounds, most preferred is magnesium acetate.

In addition to the above titanium compound and the metal compound containing a metal of Group 2A of the Periodic Table, there may also be used a reaction assistant or a co-catalyst, e.g., antimony compounds such as antimony trioxide; germanium compounds such as germanium dioxide and germanium tetraoxide; manganese compounds; zinc compounds; zirconium compounds; cobalt compounds; phosphorus compounds such as orthophosphoric acid, phosphorous acid, hypophosphorous acid, polyphosphoric acid and esters or metal salts of these compounds; sodium hydroxide; and sodium benzoate.

The titanium content in the PBT of the present invention is not particularly limited, and is preferably not more than 150 ppm (calculated as a titanium atom) based on the weight of the PBT.

In the present invention, the lower limit of the titanium content is usually 5 ppm, and become preferable 10 ppm, 20 ppm, 25 ppm in order (preferably 10 ppm, more preferably 20 ppm, still more preferably 25 ppm), whereas the upper limit of the titanium content is usually 100 ppm, and become preferable 80 ppm, 60 ppm, 50 ppm, 40 ppm in order (preferably 80 ppm, more preferably 60 ppm, still more preferably 50 ppm, further still more preferably 40 ppm). When the titanium content is too large, the resultant PBT tends to be deteriorated in color tone, hydrolysis resistance, etc., and when the titanium content is too small, the PBT tends to be deteriorated in polymerizability.

The Group 2A metal content in the PBT of the present invention is not particularly limited, and is preferably not more than 150 ppm (calculated as a Group 2A metal atom) based on the weight of the PBT.

In the present invention, the lower limit of the Group 2A metal content is usually 3 ppm, preferably 5 ppm, more preferably 10 ppm, whereas the upper limit of the Group 2A metal content is usually 100 ppm, preferably 50 ppm, more preferably 40 ppm, still more preferably 30 ppm, further still more preferably 15 ppm. When the Group 2A metal content is too large, the resultant PBT tends to be deteriorated in color tone, hydrolysis resistance, etc., and when the Group 2A metal content is too small, the PBT tends to be deteriorated in polymerizability.

In addition, the molar ratio of the titanium atom to the Group 2A metal atom contained in the PBT of the present invention is usually in the range of 0.01 to 100, preferably 0.1 to 10, more preferably 0.3 to 3, still more preferably 0.3 to 1.5.

The contents of metals such as the titanium atom, etc., may be determined by recovering these metals from the polymer by a method such as wet-ashing, and then measuring the amounts of the metals by methods such as an atomic emission spectrometric method, an atomic absorption spectrometric method and an inductively coupled plasma (ICP) method.

The end carboxyl group concentration in the PBT of the present invention is required to fall within the range of 0.1 to 18 $\mu$eq/g. When the end carboxyl group concentration is too high, the resultant PBT tends to be deteriorated in hydrolysis resistance, thereby failing to accomplish the aimed object of the present invention. The end carboxyl group concentration in the PBT is preferably 0.5 to 15 $\mu$eq/g, more preferably 1 to 12 $\mu$eq/g, still more preferably 1 to 10 $\mu$eq/g.

Meanwhile, even though the PBT initially shows a low end carboxyl group concentration, in the case where the end carboxyl group concentration in the PBT is increased by heat generated upon subsequent kneading and molding processes, there tend to be caused not only deterioration in hydrolysis resistance of the finally obtained product but also generation of gases such as THF. Therefore, the increase in end carboxyl group concentration in the PBT except for that due to a hydrolysis reaction thereof when being heat-treated in an inert gas atmosphere at 245°C for 40 min is in the range of usually 0.1 to 20 $\mu$eq/g, preferably 0.1 to 15 $\mu$eq/g, more preferably 0.1 to 10 $\mu$eq/g, still more preferably 0.1 to 8 $\mu$eq/g.

The hydrolysis reaction can be prevented by decreasing a water content in PBT, more specifically, by fully drying the PBT, but it is not possible to prevent problems caused upon molding such as generation of THF by the drying procedure. And, a increase in end carboxyl group concentration in the PBT due to decomposition reactions other than the hydrolysis reaction cannot be prevented by the drying procedure. In general, when a molecular weight of PBT is lower or a titanium content is higher, the increase in end carboxyl group concentration in PBT due to thermal decomposition reactions other than the hydrolysis reaction tends to become larger.

The reason for defining the temperature and time of the heat treatment for evaluating the increase in end carboxyl group concentration is that if the heat-treating temperature is too low or the heat-treating time is too short, the velocity of increase in end carboxyl group concentration in PBT tends to be too slow, and in the reverse case, the velocity tends to be too rapid, resulting in inaccurate evaluation thereof. Further, when the evaluation method is conducted at an extremely high temperature, side reactions other than the reaction for production of the end carboxyl group tend to be simultaneously caused, also resulting in inaccurate evaluation. Under the above-defined heat-treating conditions, the decease in number-average molecular weight of PBT due to the reactions other than the hydrolysis reaction caused by water contained in the PBT can be ignored, and the increase in end carboxyl group concentration in PBT due to the hydrolysis reaction is regarded as being identical to the increase in end glycol group concentration between before and after the heat treatment. As a result, the increase in end carboxyl group concentration in PBT can be determined according to the following formula (1):

$$\Delta AV(d) \;=\; \Delta AV(t) \;-\; \Delta AV(h) \;=\; \Delta AV(t) \;-\; \Delta OH \qquad (1)$$

wherein $\Delta AV(d)$ is an amount of change in the end carboxyl group concentration due to thermal decomposition reactions other than the hydrolysis reaction; $\Delta AV(t)$ is a total amount of change in the end carboxyl group concentration between before and after the heat treatment; $\Delta AV(h)$ is an amount of change in the end carboxyl group concentration due to the hydrolysis reaction; and $\Delta OH$ is an amount of change in the end glycol group concentration between before and after the heat treatment.

From the standpoint of the reliability of the evaluation of the thermal decomposition reactions, a less occurrence of the hydrolysis reaction is preferable. Therefore, it is recommended that the water content in PBT used upon the heat treatment is usually controlled to not more than 300 ppm. Further, the end glycol group concentrations before and after the heat treatment may be determined by $^1$H-NMR measurement.

The end carboxyl group concentration in the PBT of the present invention may be determined by subjecting a solution prepared by dissolving the PBT in an organic solvent, etc., to titration using an alkali solution such as a sodium hydroxide solution.

Also, the end vinyl group concentration in the PBT of the present invention is usually not more than 15 $\mu$eq/g, preferably not more than 10 $\mu$eq/g, more preferably not more than 8 $\mu$eq/g. When the end vinyl group concentration is too high, the PBT tends to be deteriorated in color tone and solid state polymerizability. In order to produce PBT having a large molecular weight and a low catalyst concentration without deterioration in productivity, it is generally required to raise the polymerization temperature or prolong the reaction time, resulting in tendency of increasing the end vinyl group concentration.

The PBT may sometimes contain, in addition to the above end hydroxyl group, carboxyl group and vinyl groups, residual end methoxycarbonyl groups derived from the raw materials. In particular, in the case where dimethyl terephthalate is used as the raw material, the amount of such residual end methoxycarbonyl groups tends to be increased. Meanwhile, the end methoxycarbonyl groups tend to generate methanol, formaldehyde or formic acid by heat caused upon solid state polymerization, kneading or molding, resulting in problems concerning toxicity of these compounds, in particular, when used in food-relating applications. Further, the formic acid tends to cause significant damage to molding apparatuses and vacuum-relating apparatuses attached thereto which are made of metals. Consequently, the PBT of the present invention is required to have an end methoxycarbonyl group concentration of usually not more than 0.5 $\mu$eq/g, preferably not more than 0.3 $\mu$eq/g, more preferably not more than 0.2 $\mu$eq/g, still more preferably not more than 0.1 $\mu$eq/g.

The above respective end group concentrations can be quantitatively determined by subjecting a solution prepared by dissolving the PBT in a mixed solvent containing heavy chloroform and hexafluoroisopropanol at a volume ratio of 7:3 to $^1$H-NMR measurement. Upon the $^1$H-NMR measurement, in order to prevent signals attributed to the respective end groups from being overlapped with those attributed to the solvent, a trace amount of a basic component such as heavy pyridine may be added to the solution to be measured.

The PBT of the present invention is required to have an intrinsic viscosity of 0.7 to 1.0 dL/g. When the intrinsic viscosity of the PBT is less than 0.7 dL/g, the molded product obtained from the PBT tends to be insufficient in mechanical strength. When the intrinsic viscosity of the PBT is more than 1.0 dL/g, the PBT tends to have a too high melt viscosity and, therefore, tends to be deteriorated in fluidity and moldability. The intrinsic viscosity of the PBT is preferably 0.7 to 0.9 dL/g, more preferably 0.8 to 0.9 dL/g. The above intrinsic viscosity is a value measured at 30°C using a mixed solvent containing phenol and tetrachloroethane at a weight ratio of 1:1.

The crystallization temperature of the PBT of the present invention is usually in the range of 160 to 200°C, preferably 170 to 195°C, more preferably 175 to 190°C. The crystallization temperature used herein means an exothermic peak temperature due to crystallization, which is observed when a molten resin is cooled at a temperature drop rate of 20°C/min using a differential scanning calorimeter. The crystallization temperature is substantially in proportion to a crystallization velocity of the PBT. Namely, the higher the crystallization temperature, the higher the crystallization velocity. Therefore, when the crystallization temperature becomes higher, it is possible to shorten a time required for cooling an injection-molded product, resulting in enhanced productivity. On the other hand, when the crystallization temperature is low, a long period of time is required to crystallize the PBT upon injection-molding thereof, so that it is inevitably necessary to prolong the cooling time after the injection-molding, resulting in prolonged molding cycle time and, therefore, poor productivity.

The solution haze of the PBT of the present invention is not particularly limited. Specifically, a solution prepared by dissolving 2.7 g of the PBT in 20 mL of a mixed solvent containing phenol and tetrachloroethane at a weight ratio of 3:2 exhibits a solution haze of usually not more than 10%, preferably not more than 5%, more preferably not more than 3%, still more preferably not more than 1%. When the solution haze is too high, the transparency of the PBT tends to be deteriorated and the content of impurities therein also tends to be increased. As a result, when the PBT is used in the applications requiring a good transparency such as films, monofilaments and fibers, these molded products tend to be considerably deteriorated in commercial value thereof. The solution haze tends to be increased when the degree of deactivation of the titanium catalyst is large.

The PBT of the present invention contains a cyclic dimer in an amount of usually not more than 1500 ppm, preferably not more than 1200 ppm, more preferably not more than 1000 ppm, still more preferably not more than 600 ppm based on the weight of the PBT. The lower limit of the cyclic dimer content is usually 10 ppm. Also, the PBT of the present invention contains a cyclic trimer in an amount of usually not more than 1000 ppm, preferably not more than 800 ppm, more preferably not more than 600 ppm, still more preferably not more than 300 ppm based on the weight of the PBT. The lower limit of the cyclic trimer content is usually 10 ppm. When the respective cyclic dimer content and cyclic trimer content exceed the above-specified range, there tend to arise contamination of metal mold or rolls and bleed-out of these compounds onto the surface of films, resulting in problems such as elution of these compounds when used in applications such as food packaging.

Next, the process for producing the PBT according to the present invention is described. The process for production of PBT is generally classified into a so-called direct polymerization method using a dicarboxylic acid as a main raw material, and a transesterification method using dialkyl dicarboxylate as a main raw material. In the former method, water is mainly produced at an initial esterification reaction, whereas in the latter method, alcohol is mainly produced at an initial transesterification reaction.

Also, from the standpoints of supply of the raw materials and discharge the resultant polymer, the process for producing the PBT is generally classified into a batch method and a continuous method. Further, the production process of the present invention may be performed such that after conducting the initial esterification reaction or transesterification reaction by a continuous method, the polycondensation following these reactions may be conducted by a batch method. On the contrary, after conducting the initial esterification reaction or transesterification reaction by a batch method, the polycondensation following these reactions may be conducted by a continuous method.

In the present invention, among these methods, the direct polymerization method is preferred from the standpoints of stable availability of raw materials, facilitated treatment of distillates, high unit requirement of the raw materials and high improving effects aimed by the present invention. In addition, in the present invention, from the standpoint of stable productivity, stable quality of the obtained products and high improving effects aimed by the present invention, there may be suitably used such a method in which the esterification reaction or transesterification reaction is continuously conducted while continuously supplying the raw materials. Further, in the present invention, there is preferably used a so-called continuous method in which not only the esterification or transesterification reaction but also the polycondensation reaction following these reactions are continuously conducted.

In the present invention, there is preferably used such a process in which terephthalic acid (or dialkyl terephthalate) is continuously esterified (or transesterified) with 1,4-butanediol preferably in the presence of the titanium catalyst in an esterification reaction vessel (or a transesterification reaction vessel) while supplying at least a part of the 1,4-butanediol independently of the terephthalic acid (or dialkyl terephthalate) to the esterification reaction vessel (or the transesterification reaction vessel). Hereinafter, the 1,4-butanediol supplied independently of the terephthalic acid (or dialkyl terephthalate) to the esterification reaction vessel (or the transesterification reaction vessel) is occasionally referred to merely as a "separately supplied 1,4-butanediol".

The above "separately supplied 1,4-butanediol" may be fresh 1,4-butanediol having no relation to the process. Alternatively, the "separately supplied 1,4-butanediol" may be the 1,4-butanediol recovered from the following process. Specifically, the 1,4-butanediol distilled off from the esterification reaction vessel or the transesterification reaction vessel is collected by a condenser, etc., and then may be directly used as the "separately supplied 1,4-butanediol". Alternatively, the collected 1,4-butanediol may be temporarily stored in a tank, etc., and then circulated therefrom to the reaction vessel, and further, the 1,4-butanediol may be purified by removing extraneous materials therefrom and then supplied as a high-purity 1,4-butanediol. The "separately supplied 1,4-butanediol" used in the above case is hereinafter occasionally referred to merely as a "recirculated 1,4-butanediol". From the standpoints of effective utilization of sources and simplicity of facilities used, as the "separately supplied 1,4-butanediol", preferred is the "recirculated 1,4-butanediol".

The 1,4-butanediol distilled off from the esterification reaction vessel or the transesterification reaction vessel usually contains, in addition to 1,4-butanediol itself, other components such as water, alcohol, THF and dihydrofuran. Therefore, the 1,4-butanediol distilled off from the reaction vessel is preferably purified to remove water, alcohol, THF, etc., therefrom after or while collecting the 1,4-butanediol by a condenser, etc., prior to circulating the 1,4-butanediol to the reaction vessel.

Also, in the present invention, in order to prevent deactivation of the catalyst, not less than 10% by weight of the titanium catalyst used in the esterification reaction (or transesterification reaction) is preferably directly supplied to a liquid phase portion of the reaction solution independently of the terephthalic acid (or dialkyl terephthalate). Here, the liquid phase portion of the reaction solution means a portion located on a liquid phase side with respect to a boundary face between gas and liquid in the esterification reaction vessel or the transesterification reaction vessel. The direct supply of the catalyst to the liquid phase portion of the reaction solution means that the titanium catalyst is directly added to the liquid phase portion using a conduit, etc., without passing through the gas phase portion in the reaction vessel. The amount of the titanium catalyst directly added to the liquid phase portion of the reaction solution is preferably not less than 30% by weight, more preferably not less than 50% by weight, still more preferably not less than 80% by weight, most preferably not less than 90% by weight.

The above titanium catalyst may be supplied to the liquid phase portion of the reaction solution in the esterification reaction vessel or the transesterification reaction vessel either directly or in the form of a solution prepared by dissolving the catalyst in a solvent, etc. In order to stabilize the amount of the catalyst supplied and prevent adverse influences such as deterioration in its quality due to heat generated from a heating medium jacket of the reaction vessel, the catalyst is preferably diluted with a solvent such as 1,4-butanediol. In this case, the titanium catalyst concentration in the dilute catalyst solution is in the range of usually 0.01 to 20% by weight, preferably 0.05 to 10% by weight, more preferably 0.08 to 8% based on the total weight of the solution. Further, from the standpoint of reducing the impurities, the water concentration in the dilute catalyst solution is in the range of usually 0.05 to 1.0% by weight. The dilute catalyst solution may be prepared at a temperature of usually 20 to 150°C, preferably 30 to 100°C, more preferably 40 to 80°C in order to prevent the catalyst from being deactivated or agglomerated. Further, the dilute catalyst solution is preferably mixed with the separately supplied 1,4-butanediol in a conduit, etc, and then supplied to the esterification reaction vessel or the transesterification reaction vessel from the standpoint of preventing deterioration in quality, crystallization and deactivation of the catalyst.

Further, the Group 2A metal catalyst may also be supplied to the esterification reaction vessel or the transesterification reaction vessel. The position where the Group 2A metal catalyst is supplied is not particularly limited. The Group 2A metal catalyst may be supplied to a region extending from the gas-phase portion to an upper surface of the reaction solution, or may be directly supplied to the liquid-phase portion of the reaction solution. In this case, the Group 2A metal catalyst may be supplied together with terephthalic acid and the titanium compound, or may be supplied independent of these components. From the standpoint of stability of the catalyst, the Group 2A metal catalyst is preferably supplied independent of the terephthalic acid and the titanium compound to the region extending from the gas-phase portion to the upper surface of the reaction solution.

The Group 2A metal catalyst which is generally in a solid state may be directly supplied, but is preferably supplied in the form of a dilute solution prepared by diluting the catalyst with a solvent such as 1,4-butanediol to stabilize the amount of the catalyst supplied and reduce adverse influences such as deterioration in its quality due to heat. In this case, the Group 2A metal catalyst concentration in the dilute catalyst solution is in the range of usually 0.01 to 20% by weight, preferably 0.05 to 10% by weight, more preferably 0.08 to 8% by weight based on the total weight of the solution. Further, a small amount of water may be added to the dilute catalyst solution for the purposes of preventing precipitation of the catalyst and enhancing the heat stability thereof.

On the other hand, the Group 2A metal catalyst may also be added to a polycondensation reaction vessel located subsequent to the esterification reaction vessel or the transesterification reaction vessel, or a conduit for oligomers which is connected to the polycondensation reaction vessel in an upstream side thereof. In such a case, the Group 2A metal catalyst is also preferably diluted with a solvent such as 1,4-butanediol or a copolymerizable component such as polytetramethylene ether glycol in order to stabilize the amount of the catalyst supplied or reduce adverse influences such as deterioration in quality thereof due to heat. In this case, the Group 2A metal catalyst concentration in the dilute catalyst solution is in the range of usually 0.01 to 20% by weight, preferably 0.05 to 10% by weight, more preferably 0.08 to 8% by weight based on the total weight of the solution. Further, a small amount of water may be added to the dilute catalyst solution for the purposes of preventing precipitation of the catalyst and enhancing the heat stability thereof.

An example of the continuous esterification process adopting a direct polymerization method is as follows. That is, the dicarboxylic acid component containing terephthalic acid as a main component and the diol component containing 1,4-butanediol as a main component are mixed with each other in a raw material mixing tank to prepare slurry. Then, the obtained slurry is fed to a single esterification reaction vessel or a plurality of esterification reaction vessels where the esterification reaction thereof is continuously conducted preferably in the presence of the titanium catalyst and the Group 2A metal catalyst at a temperature of usually 180 to 260°C, preferably 200 to 245°C, more preferably 210 to 235°C under a pressure of usually 10 to 133 kPa (absolute pressure), preferably 13 to 101 kPa (absolute pressure), more preferably 60 to 90 kPa (absolute pressure) for a period of usually 0.5 to 10 hours, preferably 1 to 6 hours.

In the direct polymerization method, the molar ratio between terephthalic acid and 1,4-butanediol preferably satisfies the following formula (2):

$$BM/TM = 1.1 \text{ to } 5.0 \text{ (mol/mol)} \qquad (2)$$

wherein BM is the number of moles of 1,4-butanediol supplied from outside to the esterification reaction vessel per unit time; and TM is the number of moles of terephthalic acid supplied from outside to the esterification reaction vessel per unit time.

The above "1,4-butanediol supplied from outside to the esterification reaction vessel" means a sum of 1,4-butanediols entering from outside into an inside of the reaction vessel, including 1,4-butanediol supplied together with terephthalic acid or dialkyl terephthalate in the form of a raw slurry or solution as well as 1,4-butanediol supplied independently of the terephthalic acid or dialkyl terephthalate (separately supplied 1,4-butanediol) and 1,4-butanediol used as the solvent for diluting the catalyst.

When the molar ratio BM/TM is less than 1.1, the conversion percentage into the PBT tends to be deteriorated, or the catalyst tend to be deactivated. When the molar ratio BM/TM is more than 5.0, not only deterioration in thermal efficiency but also increase in amount of byproducts such as THF tend to be caused. The molar ratio BM/TM is preferably in the range of 1.5 to 4.5, more preferably 2.5 to 4.0, still more preferably 3.1 to 3.8.

An example of the continuous process using a transesterification method is as follows. That is, in a single transesterification reaction vessel or a plurality of transesterification reaction vessels, the transesterification reaction is continuously conducted in the presence of the titanium catalyst and the Group 2A metal catalyst at a temperature of usually 110 to 260°C, preferably 140 to 245°C, more preferably 180 to 220°C under a pressure of usually 10 to 133 kPa, preferably 13 to 120 kPa, more preferably 60 to 101 kPa for a period of usually 0.5 to 5 hours, preferably 1 to 3 hours.

In the transesterification method, the molar ratio between dialkyl terephthalate and 1,4-butanediol preferably satisfies the following formula (3):

$$BM/DM = 1.1 \text{ to } 2.5 \text{ (mol/mol)} \qquad (3)$$

wherein BM is the number of moles of 1,4-butanediol supplied from outside to the transesterification reaction vessel per unit time; and DM is the number of moles of dialkyl terephthalate supplied from outside to the transesterification reaction vessel per unit time.

When the molar ratio BM/DM is less than 1.1, the conversion percentage into the PBT tends to be deteriorated, or the catalyst tend to be deactivated. When the molar ratio BM/DM is more than 2.5, not only deterioration in thermal efficiency but also increase in amount of byproducts such as THF tend to be caused. The molar ratio BM/DM is preferably in the range of 1.1 to 1.8, more preferably 1.2 to 1.5.

In the present invention, the esterification reaction or the transesterification reaction is preferably conducted at a temperature not lower than the boiling point of 1,4-butanediol in order to shorten the reaction time. The boiling point of 1,4-butanediol may vary depending upon the reaction pressure, and is 230°C under 101.1 kPa (atmospheric pressure) and 205°C under 50 kPa.

As the esterification reaction vessel or the transesterification reaction vessel, there may be used known reaction vessels, specifically, there may be used any of vertical agitation complete mixing tanks, vertical thermal convection-type mixing tanks, tower-type continuous reaction vessels, etc. The esterification reaction vessel or the transesterification reaction vessel may be constituted by a single vessel or a plurality of vessels of the same or different type connected in series or in parallel. Among these reaction vessels, preferred are those reaction vessels equipped with a stirrer. As the stirrer, there may be used not only ordinary stirring apparatuses constituted from a power section, a bearing, an axis and agitation blades, but also high-speed rotation type stirring apparatuses such as turbine-stator type high-speed rotating stirrers, disk mill type stirrers and rotor mill type stirrers.

The stirring method is not particularly limited. In the present invention, there may be used not only ordinary stirring methods in which the reaction solution is directly stirred at upper, lower and side portions of the reaction vessel, but also a method of discharging a part of the reaction solution out of the reaction vessel through a conduit, etc., stirring the solution using a line mixer, etc., and then circulating the reaction solution.

The kinds of agitation blades may be appropriately selected from known blades. Specific examples of the agitation blades may include propeller blades, screw blades, turbine blades, fan turbine blades, disk turbine blades, Faudler blades, full zone blades, maxblend blades, etc.

Next, the thus obtained esterification reaction product or transesterification reaction product in the form of an oligomer is transferred into a polycondensation reaction vessel. In this case, the oligomer has a number-average molecular weight of usually 300 to 3000, preferably 500 to 1500.

Upon production of the PBT, there may be usually used a plurality of polycondensation reaction vessels which are different in reaction conditions from each other, preferably 2 to 5 stage reaction vessels, more preferably 2 to 3 stage reaction vessels, through which the polymer produced therein is successively increased in its molecular weight. The types of the polycondensation reaction vessels may be any of vertical agitation complete mixing tanks, vertical thermal convection-type mixing tanks and tower-type continuous reaction vessels, or the combination of these types of reaction vessels. In particular, at least one of the polycondensation reaction vessels is preferably equipped with a stirrer. As the stirrer, there may be used not only ordinary stirring apparatuses constituted from a power section, a bearing, an axis and agitation blades, but also high-speed rotation type stirring apparatuses such as turbine-stator type high-speed rotating stirrers, disk mill type stirrers and rotor mill type stirrers.

The stirring method is not particularly limited. In the present invention, there may be used not only ordinary stirring methods in which the reaction solution is directly stirred at upper, lower and side portions of the reaction vessel, but also the method of discharging a part of the reaction solution out of the reaction vessel through a conduit, etc., stirring the solution using a line mixer, etc., and then circulating the reaction solution. In particular, it is recommended to use as at least one of the reaction vessels, such a horizontal-type reactor having a horizontal rotation axis which is excellent in surface renewal property and self-cleanability.

The polycondensation reaction is conducted in the presence of the catalyst at a temperature of usually 210 to 280°C, preferably 220 to 250°C, more preferably 230 to 245°C, in particular, while maintaining at least one of the reaction vessels at a temperature of 230 to 240°C, preferably while stirring, for 1 to 12 hours, preferably 3 to 10 hours under a reduced pressure of usually not more than 27 kPa, preferably not more than 20 kPa, more preferably not more than 13 kPa. The polycondensation reaction may be conducted by either a batch method or a continuous method. From the standpoints of stable quality of the obtained polymer and decrease in end carboxyl group concentration therein, the continuous method is preferred. Also, in order to prevent discoloration or deterioration of the polymer as well as increase in end groups such as end vinyl groups, at least one of the reaction vessels is preferably operated under a high vacuum condition, i.e., under a pressure of usually not more than 1.3 kPa, preferably not more than 0.5 kPa, more preferably not more than 0.3 kPa.

The polymer thus obtained by the polycondensation reaction is usually discharged from a bottom of the polycondensation reaction vessel, transported into an extrusion die, extruded therefrom into strands, and then cut into granules such as pellets and chips using a cutter while or after water-cooling.

In addition, in the polycondensation reaction process of the PBT, after conducting the melt polycondensation to produce PBT having a relatively low molecular weight, e.g., having an intrinsic viscosity of about 0.1 to 0.9 dL/g, the PBT may be successively subjected to solid state polycondensation (solid state polymerization) at a temperature not higher than the melting point of the PBT.

Upon production of the PBT of the present invention, by disposing a filter on a flow path for the polymer precursor or polymer, it is possible to obtain a polymer having a more excellent quality.

However, when the filter is disposed on an excessively upstream side of the production process, it may be difficult to remove impurities generated on a downstream side thereof. On the contrary, when the filter is disposed on a high-viscosity downstream side of the production process, the filter tends to suffer from large pressure loss. Therefore, in order to maintain a suitable flow amount of the fluid, it is required to increase the mesh size or filtering area of the filter as well as a scale of the facilities such as conduits. In addition, since the filter undergoes a high shear force when the fluid is passed therethrough, the PBT tends to be inevitably deteriorated in quality by heat generation due to the shearing. For this reason, the filter may be selectively disposed at the position where the PBT or the precursor thereof has an intrinsic viscosity of usually 0.1 to 0.9 dL/g.

As the material of the filter, there may be used any of metal winding, laminated metal mesh, metallic non-woven fabric and porous metal plate. Among these materials, laminated metal mesh and metallic non-woven fabric are preferred from the standpoint of filtration accuracy. In particular, more preferred are filters having a mesh size which is fixed by sintering treatment. The filter may have any suitable shape such as basket type, disk type, leaf disk type, tube type, flat-cylindrical type and pleated cylindrical type. Also, in order to prevent the operation of the plant from being adversely affected by disposing the filter, a plurality of filters, a switchable structure or an auto screen changer is preferably used.

The absolute filtration accuracy of the filter is not particularly limited, and is usually in the range of 0.5 to 200 $\mu$m, preferably 1 to 100 $\mu$m, more preferably 5 to 50 $\mu$m, still more preferably 10 to 30 $\mu$m. When the absolute filtration accuracy is too large, the filter may fail to exhibit the effect of decreasing impurities in the polymer product. When the absolute filtration accuracy is too small, the deterioration in productivity as well as increase in frequency of replacement of the filter tend to be caused. The absolute filtration accuracy used herein means a minimum particle size of particles which can be completely removed by filtration upon conducting a filtering test using standard size particles such as glass beads having a known uniform particle size.

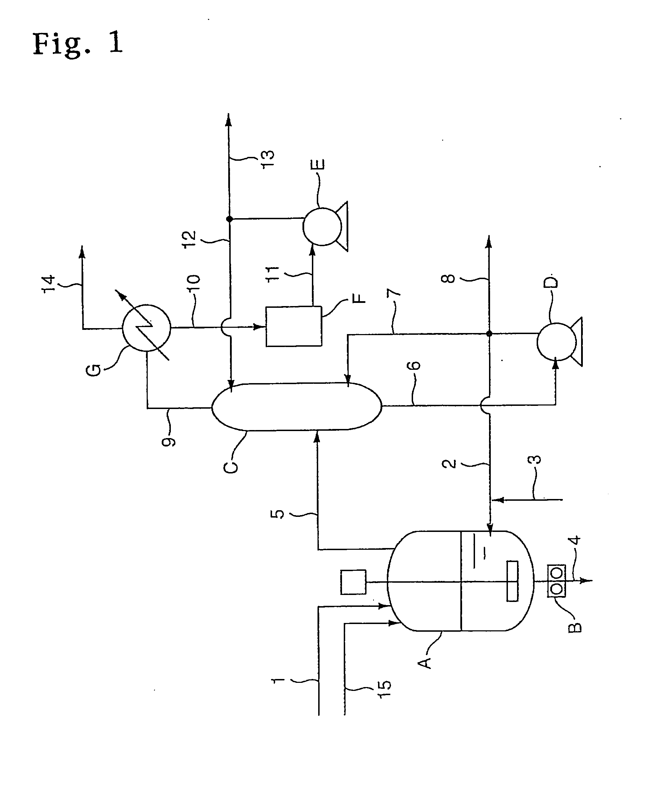

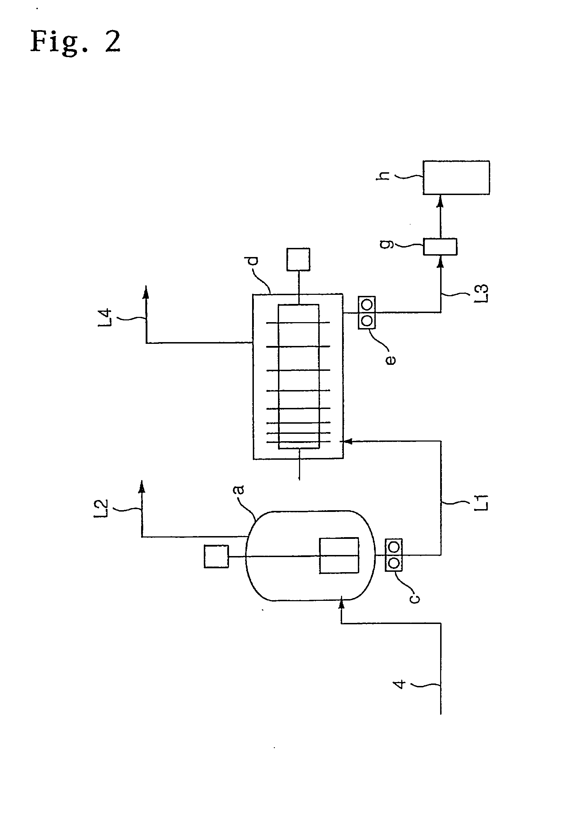

Next, the process for producing the PBT according to the preferred embodiment of the present invention is described below by referring to the accompanying drawings. Fig. 1 is an explanatory view showing an example of an esterification reaction process or a transesterification reaction process used in the present invention. Fig. 2 is an explanatory view showing an example of a polycondensation process used in the present invention.

Referring to Fig. 1, raw terephthalic acid is usually mixed with 1,4-butanediol in a raw material mixing tank (not shown), and the resultant slurry or a liquid is supplied through a raw material feed line (1) to a reaction vessel (A). On the other hand, when dialkyl terephthalate is used as a raw material, the dialkyl terephthalate is supplied usually in the form of a molten liquid to the reaction vessel (A) independently of 1,4-butanediol. A titanium catalyst is preferably dissolved in 1,4-butanediol in a catalyst preparation tank (not shown) to prepare a catalyst solution, and then supplied through a titanium catalyst feed line (3). In Fig. 1, there is shown such an embodiment in which a recirculation line (2) for feeding the recirculated 1,4-butanediol is connected to the catalyst feed line (3) to mix the recirculated 1,4-butanediol and the catalyst solution with each other, and then the resultant mixture is supplied to a liquid phase portion in the reaction vessel (A). Further, a Group 2A metal catalyst is preferably dissolved in 1,4-butanediol in a catalyst preparation tank (not shown) to prepare a catalyst solution, and then supplied through a Group 2A metal catalyst feed line (15).

Gases distilled off from the reaction vessel (A) are delivered through a distillate line (5) to a rectifying column (C) where the gases are separated into a high-boiling component and a low-boiling component. Usually, the high-boiling component is composed mainly of 1,4-butanediol, and the low-boiling component is composed mainly of water and THF in the case of the direct polymerization method, or alcohol, THF and water in the case of the transesterification method.

The high-boiling component separated at the rectifying column (C) is discharged through a discharge line (6) and then through a pump (D). Then, a part of the high-boiling component is circulated through the recirculation line (2) to the reaction vessel (A), and another part thereof is returned through a circulation line (7) to the rectifying column (C). Further, an excess of the high-boiling component is discharged outside through a discharge line (8). On the other hand, the low-boiling component separated at the rectifying column (C) is discharged through a gas discharge line (9), condensed in a condenser (G), and then delivered through a condensate line (10) to a tank (F) in which the condensed low-boiling component is temporarily stored. A part of the low-boiling component collected in the tank (F) is returned to the rectifying column (C) through a discharge line (11), a pump (E) and a circulation line (12), whereas a remaining part of the low-boiling component is discharged outside through a discharge line (13). The condenser (G) is connected to an exhaust apparatus (not shown) through a vent line (14). An oligomer produced in the reaction vessel (A) is discharged therefrom through a discharge pump (B) and a discharge line (4).

In the process shown in Fig. 1, although the recirculation line (2) is connected to the catalyst feed line (3), these lines may be disposed independently of each other. Also, the raw material feed line (1) may be connected to the liquid phase portion in the reaction vessel (A).

In the process shown in Fig. 2, the oligomer supplied from the discharge line (4) as shown in Fig. 1 above, is polycondensed under reduced pressure in a first polycondensation reaction vessel (a) to produce a prepolymer, and then supplied through a discharging gear pump (c) and a discharge line (L1) to a second polycondensation reaction vessel (d). In the second polycondensation reaction vessel (d), the polycondensation is further conducted usually under a pressure lower than that in the first polycondensation reaction vessel (a), thereby converting the prepolymer into a polymer. The thus obtained polymer is delivered through a discharging gear pump (e) and a discharge line (L3) and then supplied to a die head (g) from which the polymer is then extruded into molten strands. The obtained strands are cooled with water, etc., and then cut into pellets using a rotary cutter (h). Reference numeral (L2) represents a vent line for the first polycondensation reaction vessel (a), and reference numeral (L4) represents a vent line for the second polycondensation reaction vessel (d).

The PBT of the present invention may further contain oxidation inhibitors including phenol compounds such as 2,6-di-t-butyl-4-octyl phenol and pentaerithrityl-tetrakis[3-(3',5'-t-butyl-4'-hydroxyphenyl)propionate], thioether compounds such as dilauryl-3,3'-thiodipropionate and pentaerithrityl-tetrakis (3-laurylthiodipropionate), and phosphorus compounds such as triphenyl phosphite, tris(nonylphenyl)phosphite and tris(2,4-di-t-butylphenyl)phosphite; mold release agents including paraffin waxes, microcrystalline waxes, polyethylene waxes, long-chain fatty acids and esters thereof such as typically montanic acid and montanic acid esters, and silicone oils; or the like.

The PBT of the present invention may be blended with reinforcing fillers. The reinforcing fillers are not particularly limited. Examples of the reinforcing fillers may include inorganic fibers such as glass fibers, carbon fibers, silica/alumina fibers, zirconia fibers, boron fibers, boron nitride fibers, silicon nitride/potassium titanate fibers and metal fibers; organic fibers such as aromatic polyamide fibers and fluororesin fibers; or the like. These reinforcing fillers may be used in the combination of any two or more thereof. Of these reinforcing fillers, preferred are inorganic fillers, and more preferred are glass fibers.

In the case where the reinforcing fillers are composed of inorganic or organic fibers, an average fiber diameter thereof is not particularly limited, and is usually in the range of 1 to 100 $\mu$m, preferably 2 to 50 $\mu$m, more preferably 3 to 30 $\mu$m, still more preferably 5 to 20 $\mu$m, and an average fiber length thereof is also not particularly limited, and is usually in the range of 0.1 to 20 mm, preferably 1 to 10 mm.

The reinforcing fillers are preferably surface-treated with a sizing agent or a surface-treating agent upon the use thereof in order to enhance an interfacial adhesion between the fillers and the PBT. Examples of the sizing agent and surface-treating agent may include functional compounds such as epoxy-based compounds, acrylic-based compounds, isocyanate-based compounds, silane-based compounds and titanate-based compounds. The reinforcing fillers may be previously surface-treated with the sizing agent or surface-treating agent, or may be surface-treated therewith by adding these agents upon preparation of the PBT composition. The amount of the reinforcing fillers added is usually not more than 150 parts by weight, preferably 5 to 100 parts by weight based on 100 parts by weight of the PBT resin.

The PBT of the present invention may be blended with other fillers together with the reinforcing fillers. Examples of the other fillers blended in the PBT may include plate-shaped inorganic fillers, ceramic beads, asbestos, wollastonite, talc, clay, mica, zeolite, kaolin, potassium titanate, barium sulfate, titanium oxide, silicon oxide, aluminum oxide, magnesium hydroxide, etc. When the plate-shaped inorganic fillers are blended in the PBT, the molded product obtained from the PBT can be prevented from undergoing anisotropy and warping. Specific examples of the plate-shaped inorganic fillers may include glass flakes, mica, metal foils, etc. Of these plate-shaped inorganic fillers, preferred are glass flakes.

The PBT of the present invention may also contain a flame retardant in order to impart a good flame retardancy thereto. The flame retardant blended in the PBT is not particularly limited. Examples of the flame retardant may include organohalogen compounds, antimony compounds, phosphorus compounds, and other organic and inorganic flame retardants. Specific examples of the organohalogen compounds may include brominated polycarbonates, brominated epoxy resins, brominated phenoxy resins, brominated polyphenylene ether resins, brominated polystyrene resins, brominated bisphenol A, poly(pentabromobenzyl acrylate) or the like. Specific examples of the antimony compounds may include antimony trioxide, antimony pentaoxide, sodium antimonate or the like. Specific examples of the phosphorus compounds may include phosphoric acid esters, polyphosphoric acid, ammonium polyphosphate, red phosphorus or the like. Specific examples of the other organic flame retardants may include nitrogen compounds such as melamine and cyanuric acid, or the like. Specific examples of the other inorganic flame retardants may include aluminum hydroxide, magnesium hydroxide, silicon compounds, boron compounds or the like.

In addition, the PBT of the present invention may further contain, if required, various ordinary additives, if required. The additives are not particularly limited. Examples of the additives may include, in addition to stabilizers such as antioxidants and heat stabilizers, lubricants, mold release agents, catalyst deactivators, nucleating agent, crystallization accelerators or the like. These additives may be added during or after the polymerization reaction. The PBT may be further blended with stabilizers such as ultraviolet absorbers and weatherproof agents, colorants such as dyes and pigments, antistatic agents, foaming agents, plasticizers, impact modifiers, etc., in order to impart desired properties thereto.

Further, the PBT of the present invention may be blended, if required, with thermoplastic resins such as polyethylene, polypropylene, polystyrene, polyacrylonitrile, poly(methacrylic esters), ABS resins, polycarbonates, polyamides, poly(phenylene sulfides), poly(ethylene terephthalate), liquid crystal polyesters, polyacetal and poly(phenylene oxide); and thermosetting resins such as phenol resins, melamine resins, silicone resins and epoxy resins. These thermoplastic and thermosetting resins may be used in the combination of any two or more thereof.

The method of blending the above various additives and resins in the PBT is not particularly limited. In the present invention, there may be preferably used a blending method using a single- or twin-screw extruder or kneader equipped with a vent port for removal of volatile components. The respective components together with the additional optional components can be supplied to the kneader either simultaneously or sequentially. Also, two or more components selected from the respective components and the additional optional components may be previously mixed with each other.

The method for molding the PBT is not particularly limited, and any molding methods generally used for molding thermoplastic resins may be used in the present invention. Examples of the molding methods may include an injection-molding method, a blow-molding method, an extrusion-molding method, a press-molding method or the like.

The PBT of the present invention can be suitably used as injection-molded products such as electric and electronic parts and automobile parts because of excellent color tone, hydrolysis resistance, heat stability, transparency and moldability. In particular, the PBT of the present invention has a less content of impurities as well as an excellent transparency and, therefore, can exhibit a remarkable improving effect when used in the applications such as films, monofilaments and fibers.

EXAMPLES

The present invention is described in more detail below by Examples, but the Examples are only illustrative and not intended to limit the scope of the present invention. Meanwhile, the properties and evaluation items used in the following Examples and Comparative Examples were measured by the following methods.

(1) Esterification Conversion:

The esterification conversion was calculated from the acid value and saponification value according to the following formula (4). The acid value was determined by subjecting a solution prepared by dissolving the oligomer in dimethyl formamide to titration using a 0.1N KOH/methanol solution, whereas the saponification value was determined by hydrolyzing the oligomer with a 0.5N KOH/ethanol solution and then subjecting the hydrolyzed reaction solution to titration using 0.5N hydrochloric acid.

$$\text{Esterification Conversion} = [(\text{Saponification Value}) - (\text{Acid Value})]/(\text{Saponification Value}) \times 100 \qquad (4)$$

(2) End Carboxyl Group Concentration:

A solution prepared by dissolving 0.5 g of PBT or an oligomer thereof in 25 mL of benzyl alcohol was titrated with a benzyl alcohol solution containing 0.01 mol/L of sodium hydroxide.

(3) Intrinsic Viscosity (IV):

The intrinsic viscosity was measured using an Ubbelohde viscometer as follows. That is, using a mixed solvent containing phenol and tetrachloroethane at a weight ratio of 1:1, the drop times (s) in a 1.0 g/dL polymer solution and the solvent only were respectively measured at a temperature of 30°C, and the intrinsic viscosity was calculated according to the following formula (5):

$$IV = [(1 + 4K_H\eta_{sp})^{0.5} - 1]/2K_H C \qquad (5)$$

wherein $\eta_{sp} = \eta/\eta_0 - 1$; $\eta$ is a drop time (s) in the polymer solution; $\eta_0$ is a drop time (s) in the solvent only; C is a concentration (g/dL) of the polymer solution; and $K_H$ is a Huggins constant (0.33 was used as the value of $K_H$).

(4) Titanium Concentration and Group 2A Metal Concentration in PBT:

PBT was wet-decomposed with high-purity sulfuric acid and nitric acid used for electronic industries, and measured using high-resolution ICP (inductively coupled plasma)-MS (mass spectrometer) manufactured by Thermo-Quest Corp.

(5) End Methoxycarbonyl Group Concentration and End Vinyl Group Concentration:

About 100 mg of PBT was dissolved in 1 mL of a mixed solvent containing heavy chloroform and hexafluoroisopropanol at a volume ratio of 7:3, and the resultant solution was mixed with 36 $\mu$L of heavy pyridine and subjected to $^1$H-NMR measurement at 50°C. The $^1$H-NMR measurement was performed using "$\alpha$-400" or "AL-400" manufactured by Nippon Denshi Co., Ltd.

(6) Crystallization temperature (Tc):

Using a differential scanning calorimeter "Model DSC7" manufactured by Perkin Elmer Inc., the polymer was heated from room temperature up to 300°C at a temperature rise rate of 20°C/min, and then cooled to 80°C at a temperature drop rate of 20°C/min to measure an exothermic peak temperature which was determined as a crystallization temperature of the polymer. The higher the Tc, the higher the crystallization velocity and the shorter the molding cycle time.

(7) Solution Haze:

2.70 g of PBT was dissolved in 20 mL of a mixed solvent containing phenol and tetrachloroethane at a weight ratio of 3:2 at 110°C for 30 min, and then cooled in a constant-temperature water vessel at 30°C for 15 min. The haze of the solution was measured a turbidity meter "NDH-300A" manufacture by Nippon Denshoku Co., Ltd., which had a cell length of 10 mm. The lower the haze value, the more excellent the transparency.

(8) Increase in End Carboxyl Group Concentration due to Reactions other than Hydrolysis Reaction:

PBT pellets were pulverized, and the obtained PBT particles were dried and then filled in a 5 mm$\phi$ capillary. After an inside of the capillary was purged with nitrogen, the capillary was immersed in an oil bath controlled to 245°C under a nitrogen atmosphere. After 40 min, the capillary was taken out of the oil bath, and the contents thereof were rapidly cooled by liquid nitrogen. After the contents of the capillary was fully cooled, the contents were taken out of the capillary to measure and determine the end carboxyl group concentration and the end hydroxyl group concentration according to the above-mentioned formula (1).

(9) Cyclic Dimer Content and Cyclic Trimer Content in PBT:

After 0.1 g of PBT was dissolved in 3 mL of a mixed solvent containing hexafluoroisopropanol and chloroform at a volume ratio of 2:3, 20 mL of chloroform and 10 mL of methanol were added to the resultant solution to precipitate a polymer. Successively, a supernatant separated from the polymer by filtration was dried and solidified. The resultant solid was dissolved in 2 mL of dimethyl formamide, and subjected to a high-performance liquid chromatography using a column "MCI-GEL ODS-1LU" manufactured by Mitsubishi Chemical Corporation as well as using a mixed solvent containing a 2 wt% acetic acid aqueous solution and acetonitrile as an eluant. The smaller the cyclic dimer content or the cyclic trimer content, the less the degree of contamination of a metal mold upon molding.

(10) Color Tone of Pellets:

Using a color difference meter "Z-300A Model" manufactured by Nippon Denshoku Co., Ltd., the b value of the pellets in a L,a,b color specification system was measured, and the color tone of the pellets was evaluated by the thus measured b value. The lower the b value, the less the yellowness and the more excellent the color tone.

(11) Hydrolysis Resistance (IV Retention Rate after Hydrolysis Test):

PBT pellets were placed in a pressure container filled with pure water so as not to come into direct contact with the water, and then the container was sealed. Thereafter, the pellets were treated at 121°C for 50 hours under saturated steam to measure an intrinsic viscosity (IV') thereof. The IV retention percentage was calculated from the above measured IV and IV' values according to the following formula (6):

```
IV Retention Percentage (%) = (IV'/IV) x 100      (6)
```

The larger the IV retention rate, the higher the hydrolysis resistance.

(12) Number of Fisheyes:

A 50 $\mu$m-thick film was molded using a film quality testing system "Type FS-5" manufactured by Optical Control Systems Inc., and the number of fisheyes having a size of not less than 25 $\mu$m per 1 m$^2$ of the film was counted.

Example 1:

PBT was produced through the esterification process shown in Fig. 1 and the polycondensation process shown in Fig. 2 by the following procedure. First, terephthalic acid was mixed with 1,4-butanediol at 60°C at a molar ratio of 1.00:1.80 in a slurry preparation tank. The thus obtained slurry was continuously supplied at a feed rate of 41 kg/h from the slurry preparation tank through a raw material feed line (1) to an esterification reaction vessel (A) equipped with a screw-type stirrer which was previously filled with PBT oligomer having an esterification conversion of 99%. Simultaneously, a bottom component of a rectifying column (C) at 185°C (which contained 1,4-butanediol in an amount of not less than 98% by weight) was supplied at a feed rate of 20 kg/h through a recirculation line (2) to the reaction vessel (A), and further a 6.0 wt% 1,4-butanediol solution of tetrabutyl titanate as a catalyst at 65°C was supplied through a titanium catalyst feed line (3) to the reaction vessel (A) at a feed rate of 99 g/h (30 ppm based on theoretical yield of polymer). The water content in the catalyst solution was 0.2% by weight. Further, a 6.0 wt% 1,4-butanediol solution of magnesium acetate tetrahydrate as a catalyst at 65°C was supplied through a Group 2A metal catalyst feed line (15) to the reaction vessel (A) at a feed rate of 62 g/h (15 ppm based on theoretical yield of polymer). The water content in the catalyst solution was 10.0% by weight.

While maintaining an inside temperature and pressure of the reaction vessel (A) at 230°C and 78 kPa, respectively, water and THF as produced as well as an excess amount of 1,4-butanediol were distilled off through a distillate line (5) and delivered to the rectifying column (C) where these distillates were separated into a high-boiling component and a low-boiling component. It was confirmed that the high-boiling bottom component after the system was stabilized, contained 1,4-butanediol in an amount of not less than 98% by weight. A part of the high-boiling component was discharged outside through a discharge line (8) so as to keep a liquid level in the rectifying column (C) constant. On the other hand, the low-boiling component was removed in a gaseous state from a top of the rectifying column (C), and condensed in a condenser (G). The thus recovered low-boiling component was discharged outside through a discharge line (13) so as to keep a liquid level in a tank (F) constant.

A predetermined amount of the oligomer produced in the reaction vessel (A) was discharged through a discharge line (4) using a pump (B) to control the liquid level in the reaction vessel (A) such that an average residence time of the liquid therewithin was 2.5 hours. The oligomer discharged through the discharge line (4) was continuously supplied to a first polycondensation reaction vessel (a). After the system was stabilized, the oligomer was sampled at an outlet of the reaction vessel (A). As a result, it was confirmed that the esterification conversion of the oligomer was 96.5%.

The inside temperature and pressure of the first polycondensation reaction vessel (a) were maintained at 240°C and 2.1 kPa, respectively, and the liquid level therein was controlled such that the residence time therein was 120 min. While discharging water, THF and 1,4-butanediol from the first polycondensation reaction vessel (a) through a vent line (L2) connected to a pressure-reducing device (not shown), the initial polycondensation reaction was conducted. The reaction solution discharged from the first polycondensation reaction vessel (a) was continuously supplied to a second polycondensation reaction vessel (d).

The inside temperature and pressure of the second polycondensation reaction vessel (d) were maintained at 240°C and 130 Pa, respectively, and the liquid level therein was controlled such that the residence time therein was 60 min. While discharging water, THF and 1,4-butanediol from the second polycondensation reaction vessel (d) through a vent line (L4) connected to a pressure-reducing device (not shown), the polycondensation reaction was further conducted. The thus obtained polymer was discharged and delivered through a discharging gear pump (e) and a discharge line (L3) to a die head (g) from which the polymer was continuously extruded into strands. Then, the obtained strands were cut by a rotary cutter (h).

As a result, it was confirmed that the resultant polymer had an intrinsic viscosity of 0.70 dL/g and an end carboxyl group concentration of 10.5 $\mu$eq/g.

Further, the polymer chips were charged into a 100 L double conical-type blender and subjected to solid state polymerization treatment at 195°C under a reduced pressure of not more than 0.133 kPa for 5 hours. As a result, it was confirmed that the resultant polymer as a solid state polymerization reaction product had an intrinsic viscosity of 0.85 dL/g and an end carboxyl group concentration of 5.1 $\mu$eq/g. Other analyzed values are shown together in Table 1. The obtained PBT exhibited a less content of impurities, an excellent color tone and a good transparency.

Example 2:

The same procedure as defined in Example 1 was conducted except that the residence time in the second polycondensation reaction vessel (d) was changed to 90 min, and the polycondensation process was omitted. The analyzed values of the obtained PBT are shown together in Table 1.

Example 3:

The same procedure as defined in Example 2 was conducted except that the amounts of tetrabutyl titanate and magnesium acetate tetrahydrate fed were controlled such that the resultant polymer had the titanium content and the magnesium content as shown in Table 1, and the residence time in the second polycondensation reaction vessel (d) was changed to 75 min. The analyzed values of the obtained PBT are shown together in Table 1.

Example 4:

The same procedure as defined in Example 2 was conducted except that the amounts of tetrabutyl titanate and magnesium acetate tetrahydrate fed were controlled such that the resultant polymer had the titanium content and the magnesium content as shown in Table 1, and the inside temperature and residence time in the second polycondensation reaction vessel (d) were changed to 243°C and 75 min, respectively. The analyzed values of the obtained PBT are shown together in Table 1.

Example 5:

The same procedure as defined in Example 2 was conducted except that the amounts of tetrabutyl titanate and magnesium acetate tetrahydrate fed were controlled such that the resultant polymer had the titanium content and the magnesium content as shown in Table 1, and the residence time in the second polycondensation reaction vessel (d) was changed to 75 min. The analyzed values of the obtained PBT are shown together in Table 1.

Example 6:

The same procedure as defined in Example 2 was conducted except that the amounts of tetrabutyl titanate and magnesium acetate tetrahydrate fed were controlled such that the resultant polymer had the titanium content and the magnesium content as shown in Table 1, and the inside temperature and residence time in the second polycondensation reaction vessel (d) were changed to 245°C and 75 min, respectively. The analyzed values of the obtained PBT are shown together in Table 1.

Comparative Example 1:

The same procedure as defined in Example 2 was conducted except that the amount of tetrabutyl titanate fed was controlled such that the resultant polymer had the titanium content as shown in Table 2, and the residence time in the second polycondensation reaction vessel (d) was changed to 105 min. The analyzed values of the obtained PBT are shown together in Table 2. As a result, as shown in Table 2, it was confirmed that the end carboxyl group concentration, color tone and polymerizability were deteriorated.

Comparative Example 2:

The same procedure as defined in Example 2 was conducted except that the amount of tetrabutyl titanate fed was controlled such that the resultant polymer had the titanium content as shown in Table 2, and the residence time in the second polycondensation reaction vessel (d) was changed to 90 min. The analyzed values of the obtained PBT are shown together in Table 2. As a result, as shown in Table 2, it was confirmed that the end carboxyl group concentration, color tone, haze and polymerizability were deteriorated, and the content of impurities therein was increased.

Comparative Example 3:

A 200 L stainless steel reaction vessel equipped with turbine-type agitation blades was charged with 397.2 parts by weight of dimethyl terephthalate, 213.8 parts by weight of 1,4-butanediol and 0.144 part by weight of tetrabutyl titanate (45 ppm based on theoretical yield of the polymer), and the contents of the reaction vessel were subjected to transesterification reaction at a temperature of 150 to 215°C for 3 hours. Then, the resultant reaction solution was mixed with a solution prepared by dissolving 0.178 part by weight of magnesium acetate tetrahydrate (45 ppm based on theoretical yield of the polymer) in 1,4-butanediol, and further with 0.144 part by weight of tetrabutyl titanate (45 ppm based on theoretical yield of the polymer). Successively, the obtained oligomer was transferred to a 200 L stainless steel reaction vessel equipped with a vent tube and double helical-type agitation blades, and subjected therein to polycondensation reaction. Upon the polycondensation reaction, the inside pressure of the reaction vessel was gradually reduced from ordinary pressure to 0.133 kPa for 85 min while simultaneously raising the inside temperature thereof to a predetermined polymerization temperature, i.e., 240°C. Subsequently, the polycondensation reaction was continued at the predetermined polymerization temperature under a pressure of 0.133 kPa, and terminated upon reaching a predetermined agitation torque to discharge the resultant polymer. The analyzed values of the obtained PBT are shown together in Table 2. As a result, as shown in Table 2, it was confirmed that the end carboxyl group concentration was considerably deteriorated.

Comparative Example 4:

The same procedure as defined in Example 2 was conducted except that the amounts of tetrabutyl titanate and sodium hydroxide fed were controlled such that the resultant polymer had the respective titanium and sodium contents as shown in Table 2, and the residence time in the second polycondensation reaction vessel (d) was changed to 100 min. The analyzed values of the obtained PBT are shown together in Table 2. As a result, as shown in Table 2, it was confirmed that the color tone of the obtained PBT was deteriorated, and the number of fisheyes therein was increased.

Table 1

| Items | Unit | Examples | | | | | |
|---|---|---|---|---|---|---|---|
| | | 1 | 2 | 3 | 4 | 5 | 6 |
| Ti content | ppm | 30 | 30 | 45 | 45 | 90 | 90 |
| Mg content | ppm | 15 | 15 | 25 | 45 | 45 | - |
| Ca content | ppm | - | - | - | - | - | 45 |
| Na content | ppm | - | - | - | - | - | - |
| Intrinsic viscosity [IV] | dL/g | 0.85 | 0.86 | 0.85 | 0.84 | 0.85 | 0.84 |
| End carboxyl group concentration | $\mu$eq/g | 5.1 | 10.3 | 14.2 | 17.3 | 17.1 | 17.8 |
| Crystallizatio n temperature (Tc) | °C | 178.6 | 178.5 | 178.9 | 178.5 | 178.8 | 178.5 |
| End vinyl group concentration | $\mu$eq/g | 3.5 | 3.5 | 4.5 | 8.3 | 4.6 | 11.4 |
| End methoxycarbony 1 group concentration | $\mu$eq/g | ≤0.1 | ≤0.1 | ≤0.1 | ≤0.1 | ≤0.1 | ≤0.1 |
| Solution haze | % | 0.1 | 0.1 | 0.1 | 0.1 | 3.5 | 5.5 |
| $\Delta$AV (d) | $\mu$eq/g (40 min) | 3.7 | 3.5 | 5.5 | 6.3 | 7.4 | 8.8 |
| Cyclic dimer | ppm | 500 | 3530 | 3300 | 3800 | 3650 | 3800 |
| Cyclic trimer | ppm | 150 | 2550 | 2400 | 2700 | 2500 | 2700 |
| Color tone of pellets (b value) | | -1.7 | -2.5 | -2.2 | -2.2 | -1.8 | -1.6 |
| Hydrolysis resistance | % | 90 | 86 | 81 | 77 | 77 | 76 |
| Number of fisheyes | per $m^2$ | 330 | 230 | 300 | 330 | 450 | 500 |

Table 2

| Items | Unit | Comparative Examples | | | |
|---|---|---|---|---|---|
| | | 1 | 2 | 3 | 4 |
| Ti content | ppm | 45 | 90 | 90 | 4.5 |

(continued)

| Items | Unit | Comparative Examples | | | |
|---|---|---|---|---|---|
| | | 1 | 2 | 3 | 4 |
| Mg content | ppm | - | - | 45 | - |
| Ca content | ppm | - | - | - | - |
| Na content | ppm | - | - | - | 17 |
| Intrinsic viscosity [IV] | dL/g | 0.85 | 0.86 | 0.84 | 0.85 |
| End carboxyl group concentration | μeq/g | 20.4 | 24.2 | 32.4 | 14.4 |
| Crystallizatio n temperature (Tc) | °C | 178.6 | 179.1 | 168.2 | 176.5 |
| End vinyl group concentration | μeq/g | 5.1 | 4.7 | 4.4 | 5.0 |
| End methoxycarbonyl group concentration | μeq/g | ≤0.1 | ≤0.1 | 1.5 | ≤0.1 |
| Solution haze | % | 2.5 | 33.1 | 0.1 | 2.0 |
| ΔAV (d) | μeq/g (40 min) | 6.7 | 9.1 | 10.9 | 6.0 |
| Cyclic dimer | ppm | 3600 | 3550 | 3500 | 3700 |
| Cyclic trimer | ppm | 2600 | 2600 | 2500 | 2800 |
| Color tone of pellets (b value) | | -1.5 | -0.5 | -1.5 | -0.5 |
| Hydrolysis resistance | % | 72 | 70 | 60 | 75 |
| Number of fisheyes | per m$^2$ | 1200 | 2500 | 1350 | 720 |

The present patent application is based on Japanese Patent Application No. 2004-108918 filed on April 1, 2004 which is incorporated herein as a whole by reference.

**Claims**

1.   Polybutylene terephthalate having an intrinsic viscosity of 0.7 to 1.0 dL/g and an end carboxyl group concentration of 0.1 to 18 μeq/g, which is produced in a presence of a catalyst comprising a titanium compound and a metal compound containing a metal of Group 2A of the Periodic Table.

2.   Polybutylene terephthalate according to claim 1, wherein said polybutylene terephthalate has a crystallization temperature of 170 to 195°C as measured at a temperature drop rate of 20°C/min using a differential scanning colorimeter.

3.   Polybutylene terephthalate according to claim 1 or 2, wherein said polybutylene terephthalate has an end vinyl group concentration of not more than 10 μeq/g.

4.   Polybutylene terephthalate according to any of claims 1 to 3, wherein a solution haze of a solution prepared by dissolving 2.7 g of said polybutylene terephthalate in 20 mL of a mixed solvent containing phenol and tetrachloroethane at a weight ratio of 3:2, is not more than 10%.

5.   Polybutylene terephthalate according to any of claims 1 to 4, wherein said polybutylene terephthalate contains a cyclic dimer in an amount of not more than 1500 ppm.

6.   Polybutylene terephthalate according to any of claims 1 to 5, wherein said polybutylene terephthalate contains a cyclic trimer in an amount of not more than 1000 ppm.

7.   Polybutylene terephthalate according to any of claims 1 to 6, wherein said polybutylene terephthalate has an end methoxycarbonyl group concentration of not more than 0.5 μeq/g.

8.   Polybutylene terephthalate according to any of claims 1 to 7, wherein said polybutylene terephthalate contains titanium in an amount of not more than 80 ppm, calculated as a titanium atom.

9. Polybutylene terephthalate according to any of claims 1 to 8, wherein said polybutylene terephthalate contains a metal of Group 2A of the Periodic Table in an amount of not more than 50 ppm, calculated as a metal atom of Group 2A of the Periodic Table.

10. Polybutylene terephthalate according to any of claims 1 to 9, wherein said metal of Group 2A of the Periodic Table is magnesium.

11. Polybutylene terephthalate according to any of claims 1 to 10, wherein said end carboxyl group concentration is in the range of 1 to 10 μeq/g.

12. Polybutylene terephthalate according to any of claims 1 to 11, wherein said intrinsic viscosity is in the range of 0.8 to 0.9 dL/g.

13. Polybutylene terephthalate according to any of claims 1 to 12, wherein an increase in said end carboxyl end group concentration except for that due to a hydrolysis reaction of the polybutylene terephthalate is in the range of 0.1 to 30 μeq/g when the polybutylene terephthalate, is heat-treated in an inert gas atmosphere at 245°C for 40 min.

14. Polybutylene terephthalate as defined in any of claims 1 to 13, which is obtained by a production process including a continuous esterification process adopting a direct polymerization method.

Fig. 1

EP 1 731 546 A1

# Fig. 2

<div align="center">

**INTERNATIONAL SEARCH REPORT**

</div>

| | International application No. |
|---|---|
| | PCT/JP2005/005905 |

**A. CLASSIFICATION OF SUBJECT MATTER**
Int.Cl⁷ C08G63/85

According to International Patent Classification (IPC) or to both national classification and IPC

**B. FIELDS SEARCHED**

Minimum documentation searched (classification system followed by classification symbols)
Int.Cl⁷ C08G63/00-63/91

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2003/69339 A1 (MITSUBISHI ENGINEERING-PLASTICS CORP.), 10 April, 2003 (10.04.03), Claims 1, 4; Par. No. [0083] & JP 2003-12781 A Claims 1, 4; Par. No. [0010] | 1-14 |
| A | JP 10-310638 A (Polyplastics Co., Ltd.), 24 November, 1998 (24.11.98), Claims 1, 6; Par. Nos. [0006], [0013], [0014], [0016], [0022] (Family: none) | 1-14 |
| A | JP 8-3428 A (Teijin Ltd.), 09 January, 1996 (09.01.96), Claim 1; Par. Nos. [0014], [0035] (Family: none) | 1-14 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 April, 2005 (13.04.05) | 10 May, 2005 (10.05.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

## REFERENCES CITED IN THE DESCRIPTION

**Patent documents cited in the description**

- JP 9316183 A
- JP 8020638 A
- JP 8041182 A
- JP 2004108918 A

**Non-patent literature cited in the description**

- Handbook of Saturated Polyester Resins. Nikkan Kogyo Newpaper Co., Ltd, 22 December 1989, 192-193304